# DEMANDE DE BREVET EUROPEEN

(11) **EP 1 076 308 A1**
(43) Date de publication de la demande: **14.02.2001**
(21) Numéro de dépôt: 00390012.3
(22) Date de dépôt: 03.08.2000
(51) Int. Cl.: G06F 17/60

(54) **Site commercial comprenant au moins un espace de loisirs et système informatique de gestion**

(30) Priorité: 13.08.1999 FR 9910487
(71) Demandeur: Prestadis S.N.C., Société en Nom Collectif, 31650 Saint Orens de Gameville (FR)
(72) Inventeur: Nauleau, Rémy, 31650 Saint Orens de Gameville (FR)
(74) Mandataire: Cabinet BARRE LAFORGUE & associés

(57) **Abrégé**

L'invention concerne un site commercial comprenant au moins un commerce (1, 2, 3, 4, 5), au moins un espace de loisirs (20) à proximité, un système informatique de gestion (27) dans lequel des comptes de points d'utilisateurs sont mémorisés et débités selon l'utilisation de l'espace de loisirs (20). Les points sont attribués aux clients notamment lors d'une fréquentation d'au moins un commerce (1, 2, 3, 4, 5).

## Description

L'invention concerne un site commercial.

Par "site commercial", on désigne dans tout le texte un ensemble comprenant un commerce ou une pluralité de commerces situés dans une même zone géographique de chalandise. Les différents commerces d'un site commercial ne sont donc pas nécessairement situés dans une même structure immobilière (comme dans le cas d'un centre commercial ou d'une galerie commerciale), et ne se jouxtent pas nécessairement les uns les autres, même si ces cas particuliers sont couverts par cette définition. La zone de chalandise englobe la zone dans laquelle les clients peuvent se déplacer à pied d'un commerce à l'autre sans autre moyen de transport, mais n'est pas limitée à cette zone, cette définition englobant les cas où les clients peuvent ou doivent se déplacer d'un commerce à l'autre par des moyens de transport individuels ou collectifs. Par "commerce", on désigne dans tout le texte toute installation commerciale fixe située dans un lieu déterminé, et dans laquelle des produits et/ou des services peuvent être vendus à des clients. Cette définition englobe, sans y être limitée, les magasins de vente, en libre-service ou non, d'articles ou produits de consommation courante (supermarchés, hypermarchés, grands ou petits magasins spécialisés (épicerie et articles alimentaires, vêtements, jouets, articles de sports, articles électroniques ou ménagers, articles de bricolage, stations essences, ...)), et les commerces de vente de services tels que restauration, hôtellerie, cinémas ou autres salles de spectacles, agences de voyages, salons de coiffure ou autres soins corporels, garages d'entretien ou réparation de véhicules, salles de sport, agences immobilières, banques, ...

Compte tenu de la situation de concurrence dans laquelle sont placées les activités commerciales, l'un des buts principaux poursuivis par un commerce est de pouvoir fidéliser une clientèle. On sait aujourd'hui en effet que la clientèle d'un commerce n'est plus captive, car elle n'est pas limitée dans ses possibilités de déplacements (compte tenu des moyens modernes de transport), et ne peut plus être captée par des considérations purement économiques puisque les prix tendent à s'uniformiser autour des valeurs minimales de rentabilité. Ce but peut aussi être un but collectif de plusieurs commerces appartenant à un même site commercial.

L'un des moyens utilisés depuis longtemps pour fidéliser la clientèle est de fournir aux clients une carte de fidélité, ou des réductions (bons de réductions, bons d'achats, ...) ou, plus généralement, des avantages commerciaux selon leur comportement d'achat ou leur profil. De nombreux systèmes ont été proposés à cette fin pour gérer automatiquement la délivrance et/ou l'utilisation de tels avantages commerciaux. Cette solution donne parfois satisfaction, mais trouve maintenant des limites dans la mesure où la plupart des commerces modernes sont équipés de ces systèmes.

On sait qu'une grande partie de la clientèle se déplace par groupes de personnes, notamment en famille, par goût ou par obligation, par exemple dans le cas des enfants ne pouvant être laissés au domicile en l'absence des parents. Pour compenser l'ennui que représentent les achats pour les enfants, on peut penser à installer des jeux payants ou gratuits à l'entrée ou, à la sortie, ou au voisinage du commerce. Néanmoins, de tels jeux ne constituent pas une incitation réelle à la fréquentation d'un commerce. En effet, lorsqu'ils sont payants, les parents rechignent souvent à dépenser de l'argent pour permettre à leurs enfants de les utiliser. Lorsque les jeux sont gratuits, ils perdent souvent leur caractère attractif, et s'ils sont encore vraiment attractifs, les enfants demandent à pouvoir les utiliser longtemps, ce qui est aussi pénible pour les parents qui, en fin de compte, limitent la durée d'utilisation arbitrairement. Lorsque les enfants sont très motivés et réclament fortement de pouvoir utiliser les jeux à chaque fréquentation du commerce, il en résulte l'effet opposé à celui escompté, les parents étant dissuadés à l'avance de fréquenter le commerce du fait de la présence de jeux. Ainsi, on constate en pratique que de tels jeux représentent finalement plus de gêne ou de frustration pour les clients qu'un avantage incitatif à la fréquentation du commerce. En outre, ces jeux peuvent être utilisés par des personnes non clientes.

La création d'un espace de loisirs de dimensions importantes à machines ou attractions payantes très attractives à proximité d'un commerce aurait comme conséquence inéluctable d'attirer au voisinage du commerce un profil de clientèle pouvant être très différent de celui recherché par le commerçant. Ainsi, le profil de clientèle, souvent formé de personnes désoeuvrées ou même délinquantes, des salles de machines de jeux à prépaiement ("machines à sous") ou des attractions foraines n'est pas compatible avec le commerce traditionnel.

Par ailleurs, le domaine des espaces de loisirs familiaux (jeux d'enfants d'intérieur ou d'extérieur, attractions pour enfants, machines électroniques de jeux virtuels, ...) est un domaine spécifique contrôlé par un petit nombre d'industriels qui fabriquent les installations et/ou exploitent à leur profit, directement ou indirectement, les espaces de loisirs à des prix importants (classiquement de l'ordre de 3 à 10 francs français par minute). Si de tels prix peuvent être acceptés par les clients recherchant uniquement l'utilisation de ces loisirs en tant que tels, ils ne sont pas compatibles avec une utilisation accessoire à celle de la fréquentation d'un commerce. Ainsi, il n'est pas raisonnablement possible d'envisager que les parents dépensent, pour les loisirs des enfants lorsqu'ils font leurs courses, une somme équivalente ou supérieure à celle des achats effectués.

Dans ce contexte, l'invention vise à proposer un site commercial incorporant un dispositif permettant de contrôler automatiquement l'accès à un espace de loisirs par des clients d'au moins un commerce du site commercial et/ou par les personnes les accompagnant, sans présenter les inconvénients susmentionnés. Par "espace de loisirs", on désigne dans tout le texte tout espace dans lequel il est possible à des utilisateurs d'avoir des activités autres que la fréquentation dudit commerce, notamment de divertissement. Cette définition englobe donc, sans y être limitée, les salles de jeux ou d'attractions, les jardins ou garderies d'enfants, les jeux d'extérieurs, et les salles ou ensembles de fourniture de services de loisirs (mise à disposition d'ordinateurs, terminaux télématiques, spectacles, projections de films, diffusions d'enregistrements sonores, prêts de livres, services éducatifs ou culturels, jeux, jouets, attractions, jeux vidéo, jeux de billards électroniques ou non, jeux virtuels, jeux de loterie, services aux personnes, ...) et/ou de produits (boissons, nourritures, gadgets, cigarettes, journaux, livres,...).

L'invention vise plus particulièrement à permettre d'atteindre ce but sans que l'accès à l'espace de loisirs ne soit payant (c'est-à-dire nécessite une dépense d'argent) ni qu'il ne soit totalement libre et ne dépende que de la décision du client lui-même.

L'invention vise aussi à proposer un système informatique de gestion d'au moins un espace de loisirs d'un site commercial selon l'invention.

Pour ce faire, l'invention concerne un site commercial comprenant au moins un commerce équipé d'un système d'encaissement pour l'enregistrement et le paiement des achats, et au moins un espace de loisirs disposé à proximité immédiate d'au moins un commerce, cet espace de loisirs comprenant au moins une zone close dotée de moyens de contrôle d'accès à cette zone, et/ou au moins une machine de fourniture de services et/ou de produits dotée de moyens de contrôle d'utilisation de la machine, caractérisé :
- en ce que les moyens de contrôle d'accès d'au moins une zone close et/ou les moyens de contrôle d'utilisation d'au moins une machine comportent des moyens de reconnaissance de données d'identification d'un utilisateur de l'espace de loisirs, fournies par cet utilisateur lorsqu'il souhaite accéder à l'espace de loisirs,
- en ce que l'espace de loisirs comprend un système informatique, dit système informatique de gestion, comprenant des moyens de mémorisation des données d'identification de chaque utilisateur, et pour chaque utilisateur identifié, des moyens de mémorisation d'au moins un compte de points représentatifs d'une durée d'accès à la zone et/ou d'une durée d'utilisation de la machine et/ou d'une quantité de services et/ou de produits fournis par la machine, ce système informatique de gestion comprenant un serveur central relié aux moyens de contrôle d'accès et/ou aux moyens de contrôle d'utilisation, ce serveur central étant programmé et adapté pour :
   - recevoir les données d'identification d'un utilisateur reconnues par les moyens de reconnaissance, et déterminer si elles correspondent à des données précédemment mémorisées d'un utilisateur identifié,
   - commander le fonctionnement des moyens de contrôle d'accès et/ou des moyens de contrôle d'utilisation en autorisant l'accès à la zone et/ou l'utilisation de la machine par un utilisateur uniquement selon le crédit de points dont il dispose dans son compte de points,
   - débiter le compte de points d'un utilisateur, à chaque accès à la zone par cet utilisateur d'une valeur prédéterminée selon la durée d'accès à la zone par cet utilisateur et/ou à chaque utilisation de la machine par cet utilisateur d'une valeur prédéterminée selon la durée d'utilisation de la machine par cet utilisateur et/ou selon la quantité de services et/ou de produits fournis par la machine à cet utilisateur,
- et en ce que le système d'encaissement d'au moins un commerce est doté de moyens d'attribution de points permettant d'attribuer à un client, lors d'une fréquentation du commerce par le client, un crédit de points, ces moyens d'attribution de points et ledit système informatique de gestion étant adaptés pour que les points attribués à un client par les moyens d'attribution de points puissent être transmis au système informatique de gestion, mémorisés et utilisés par ce système informatique de gestion dans au moins un compte de points d'un utilisateur, de sorte que cet utilisateur peut utiliser l'espace de loisirs selon les points qui ont été préalablement attribués au client par le système d'encaissement d'au moins un commerce du site commercial, et qu'une personne ne disposant pas d'un compte de points ou d'un crédit de points suffisant dans un compte de points des moyens informatiques de gestion ne peut pas utiliser l'espace de loisirs.

L'invention permet ainsi de fournir un nouveau service extrêmement attractif aux clients d'au moins un commerce du site commercial de façon fiable et incitative vis-à-vis de la fréquentation dudit commerce. La fréquentation de l'espace de loisirs n'étant possible qu'à partir des points attribués par le(s) commerce(s), aucune fréquentation par une clientèle indésirable n'est possible. En outre, l'utilisation de l'espace de loisirs n'est pas directement coûteuse pour les clients mais est néanmoins contrôlée de façon objective (c'est-à-dire ne dépend pas uniquement de la volonté des clients, ni de celle des utilisateurs). Egalement, la valeur ou la quantité des points (c'est-à-dire les possibilités d'utilisation de l'espace de loisirs) attribués aux clients, peut être ajustée précisément selon la clientèle et selon les caractéristiques de l'espace de loisirs, par exemple pour que le temps moyen passé par les clients dans chaque commerce puisse correspondre au moins sensiblement à celui passé par les utilisateurs dans l'espace de loisirs.

Du fait que les utilisateurs sont identifiés lors de leur accès à l'espace de loisirs, aucun risque de vandalisme n'est à craindre. En outre, les points étant mémorisés dans le système informatique de gestion, les utilisateurs ne sont porteurs d'aucune valeur directement négociable par un tiers, mais uniquement de leurs données d'identification personnelles. Les données d'identification de chaque utilisateur peuvent être inscrites ou mémorisées sur un support simple et peu coûteux, adapté pour ne pas être utilisable par un tiers non autorisé. Ces données peuvent de surcroît être protégées contre l'utilisation par un tiers non autorisé à l'aide d'un code confidentiel associé mémorisé dans le système informatique de gestion et qui doit être saisi par l'utilisateur. Ainsi, il est en particulier à noter que les utilisateurs ne sont pas porteurs d'une carte dans laquelle un crédit de points ou une intelligence particulière est mémorisée. Le risque d'agression des utilisateurs est ainsi minimisé.

L'expression "l'espace de loisirs est à proximité immédiate d'au moins un commerce" signifie que l'espace de loisirs est situé à l'entrée et/ou à la sortie et/ou à une distance suffisamment faible -notamment inférieure à 500 m- du commerce pour pouvoir être franchie aisément à pieds, de sorte que les personnes telles que les enfants accompagnant les clients du commerce peuvent être utilisateurs de l'espace de loisirs alors que les clients procèdent à leurs achats.

Avantageusement et selon l'invention, le site commercial est en outre caractérisé par une ou plusieurs des caractéristiques suivantes :
- les moyens de reconnaissance comportent des moyens d'affichage d'informations reçues du serveur central du système informatique de gestion -notamment le solde des points du compte de points de l'utilisateur identifié ou un message de non-identification,
- les données d'identification d'un utilisateur sont représentées par un code graphique pouvant être lu par des moyens optoélectroniques de lecture, et les moyens de reconnaissance des données d'identification comportent des moyens optoélectroniques de lecture de tels codes graphiques,
- les moyens de reconnaissance des données d'identification d'un utilisateur comportent des moyens de lecture adaptés pour pouvoir lire des données d'identification inscrites sur un support d'identification présenté par l'utilisateur,
- le support d'identification est une carte au format d'une carte bancaire, (de l'ordre de 4 à 7 cm de largeur et de 5 à 10 cm de longueur - notamment au format standard 5,4 cm x 8,5 cm -),
- il comprend au moins un type de support d'identification émis par un commerce, dit carte de fidélité portant des données d'identification individuelle d'un client, et les données d'identification de chaque client inscrites sur chaque carte de fidélité sont mémorisées par ledit système d'encaissement dudit commerce,
- il comprend au moins un type de support d'identification, qui est un support édité et émis par l'intermédiaire du système informatique de gestion et est spécifique à l'espace de loisirs,
- lesdits moyens d'attribution de points sont adaptés pour attribuer des points à un client lors d'une transaction d'achat,
- au moins un système d'encaissement d'au moins un commerce comprend un système informatique, dit système informatique d'encaissement, comportant :
   - des moyens de reconnaissance de données d'identification de clients lors de leur passage par le système d'encaissement,
   - des moyens de mémorisation des données d'identification de chaque client,
   - pour chaque client identifié, des moyens de mémorisation d'au moins un compte d'avantages commerciaux alloués au client permettant d'attribuer au client un crédit et/ou un débit d'avantages commerciaux,
- au moins un système informatique d'encaissement et ledit système informatique de gestion comportent des moyens de connexion de l'un à l'autre et de transmission de données entre eux par un réseau de transmission de données,
- lesdits moyens d'attribution de points comprennent, pour chaque client identifié, un compte d'avantages commerciaux dudit système informatique d'encaissement dont la valeur est considérée comme des points, ledit système informatique d'encaissement étant adapté pour pouvoir attribuer des points à un client lors d'une transaction d'achat au système d'encaissement, et pour en transmettre la valeur au système informatique de gestion via le réseau après chaque transaction d'achat d'un client,
- les moyens de connexion du système informatique de gestion de l'espace de loisirs sur ledit réseau de transmission de données sont adaptés pour permettre une connexion permanente et une transmission de données en temps réel,
- le système informatique d'encaissement d'un commerce comprend au moins un serveur de contrôle d'au moins une caisse doté de moyens de connexion permanente sur ledit réseau de transmission de données adaptés pour permettre une transmission des données en temps réel,
- au moins un commerce est un magasin de vente en libre-service d'articles de consommation courante, et l'espace de loisirs est disposé à proximité immédiate d'un tel magasin, de sorte qu'il peut accueillir, en tant qu'utilisateurs, des personnes -notamment des enfants ou adolescents-accompagnant les clients du magasin pendant que ces derniers fréquentent le magasin,
- le système informatique de gestion comprend au moins un fichier dans lequel les données d'identification et des informations relatives aux utilisateurs sont mémorisées et regroupées par foyer, chaque foyer regroupant des utilisateurs domiciliés à une même adresse,
- il comprend plusieurs commerces à proximité immédiate de l'espace de loisirs,
- lesdits moyens d'attribution de points comprennent :
   - dans le système informatique de gestion :
      * des moyens de mémorisation d'au moins un code, dit code coupon, représentatif d'une valeur prédéfinie d'un nombre X de points pouvant être éditée sous forme de coupons de points, et du nombre de coupons de X points édités correspondant à ce code coupon et portant l'inscription de cette valeur de X points,
      * des moyens de reconnaissance de la valeur de X points d'un coupon de X points présenté par un utilisateur, adaptés pour créer s'il n'en existe pas déjà, et créditer un compte de points de l'utilisateur d'une valeur de X points dans le serveur central,
   - dans au moins un commerce, un stock de coupons de X points dont le code coupon est mémorisé dans le système informatique de gestion, ce stock étant disposé au niveau du système d'encaissement du commerce de façon que les coupons de X points puissent être distribués aux clients du commerce lors des transactions d'achat,
- les moyens de mémorisation d'un code coupon comportent au moins un champ identifiant un commerce auquel les coupons de X points édités sont fournis,
- le code coupon comprend une valeur représentative d'un code graphique pouvant être lu par des moyens optoélectroniques de lecture, chaque coupon de X points porte le code graphique correspondant, et le système informatique de gestion comporte des moyens optoélectroniques de lecture de ce code graphique,
- le système informatique de gestion comporte des moyens de mémorisation d'au moins une série de codes, dits codes utilisateurs, chaque code utilisateur étant adapté pour pouvoir identifier un utilisateur et repérer un enregistrement d'informations d'identification relatives à cet utilisateur après que ces informations d'identification ont été saisies et mémorisées,
- les codes utilisateurs sont formés de valeurs représentatives de codes graphiques pouvant être lues par des moyens optoélectroniques de lecture, et les moyens de reconnaissance des données d'identification d'un utilisateur comportent des moyens optoélectroniques de lecture de tels codes graphiques,
- il comprend au moins une série de codes utilisateurs éditée en un exemplaire unique sur des supports individuels portant chacun un code utilisateur unique,
- les moyens de mémorisation de cette série de codes utilisateurs comprennent au moins un champ dont la valeur permet de reconnaître que les codes utilisateurs ont été édités, et au moins un commerce comprend un stock de supports de codes utilisateurs édités, ce stock étant disposé au niveau du système d'encaissement du commerce de façon que les supports de codes utilisateurs puissent être distribués aux clients lors des transactions d'achat,
- les moyens de mémorisation de la série de codes utilisateurs comportent au moins un champ identifiant un commerce auquel les supports de codes utilisateurs sont fournis,
- les supports de codes utilisateurs sont formés d'étiquettes autocollantes,
- les moyens de mémorisation d'une série de codes utilisateurs comportent au moins un champ représentatif d'une valeur prédéfinie d'un nombre de X points pouvant, lors de la création d'un compte de points d'un utilisateur présentant pour la première fois un support de codes utilisateurs, être créditée dans ledit compte de points de l'utilisateur identifié par ledit code utilisateur,
- l'espace de loisirs comprend au moins une zone close dotée de moyens de contrôle d'accès, et exempte de machine de fourniture de services et/ou de produits et dotée de moyens de contrôle d'utilisation, cette zone renfermant des moyens de fourniture de loisirs -notamment choisis dans le groupe des jeux, jouets, attractions, spectacles, livres, services informatiques, ordinateurs, terminaux télématiques, projections de films, diffusions d'enregistrements sonores (notamment musicaux), diffusions d'enregistrements multimédia- pouvant être librement utilisés par les personnes ayant accédé à cette zone,
- l'espace de loisirs comprend au moins une zone close dotée de moyens de contrôle d'accès et renfermant au moins une machine de fourniture de services et/ou de produits dotés de moyens de contrôle d'utilisation,
- l'espace de loisirs comprend au moins une machine de fourniture de services et/ou de produits dotés de moyens de contrôle d'utilisation et qui est disposée dans une zone libre d'accès,
- chaque zone et/ou chaque machine de l'espace de loisirs est commandée par le système informatique de gestion,
- le système informatique de gestion comprend un automate central de commutation relié au serveur central du système informatique de gestion et piloté par ce serveur central, les moyens de contrôle d'utilisation de chaque machine et les moyens de contrôle d'accès de chaque zone close étant reliés par un câble à l'automate central de commutation, de sorte que le serveur central pilote les moyens de contrôle d'utilisation et les moyens de contrôle d'accès via l'automate central de commutation,
- le système informatique de gestion est adapté pour pouvoir commander individuellement le fonctionnement de moyens de signalisation solidaires d'une zone ou d'une machine aptes à signaler un mode de fonctionnement spécial -notamment promotionnel- de cette zone ou machine,
- le système informatique de gestion comporte au moins un poste de saisie/consultation adapté pour permettre la saisie d'informations relatives à un utilisateur, la création d'un compte de points pour un utilisateur, la délivrance d'un support de données d'identification ou d'un code utilisateur à un utilisateur, la modification et/ou la consultation par un utilisateur d'informations mémorisées dans le système informatique de gestion -notamment l'attribution manuelle ou automatique de points du compte de points d'un utilisateur dans au moins un compte de points d'un autre utilisateur, et la consultation du solde de son compte de points- par un utilisateur. Un tel poste de saisie/consultation comprend un terminal relié au système informatique de gestion, et peut se présenter sous la forme d'une borne à accès libre.

L'invention concerne également un système informatique de gestion d'au moins un espace de loisirs d'un site commercial selon l'invention. Un système informatique de gestion selon l'invention est avantageusement caractérisé par une ou plusieurs des caractéristiques mentionnées ci-dessus.

L'invention concerne aussi un site commercial et un système informatique de gestion caractérisés en combinaison par tout ou partie des caractéristiques mentionnées ci-dessus ou ci-après.

L'invention s'étend aussi au procédé informatique tel que décrit ci-dessus ou ci-après de gestion d'au moins un espace de loisirs mis en oeuvre par un système informatique de gestion selon l'invention.

D'autres buts, caractéristiques et avantages de l'invention apparaîtront à la lecture de la description suivante qui se réfère aux figures annexées dans lesquelles :
- la figure 1 est un schéma illustrant un exemple de site commercial selon l'invention,
- la figure 2 est un schéma illustrant un système informatique de gestion selon l'invention relié dans un réseau avec un système informatique d'encaissement,
- la figure 3 est un schéma illustrant un exemple de support d'identification d'un utilisateur d'un espace de loisirs d'un site commercial selon l'invention,
- la figure 4 est un schéma illustrant des étiquettes autocollantes servant de supports de codes utilisateurs dans un site commercial selon l'invention,
- la figure 5 est un schéma illustrant des coupons supports de codes coupons d'un site commercial selon l'invention,

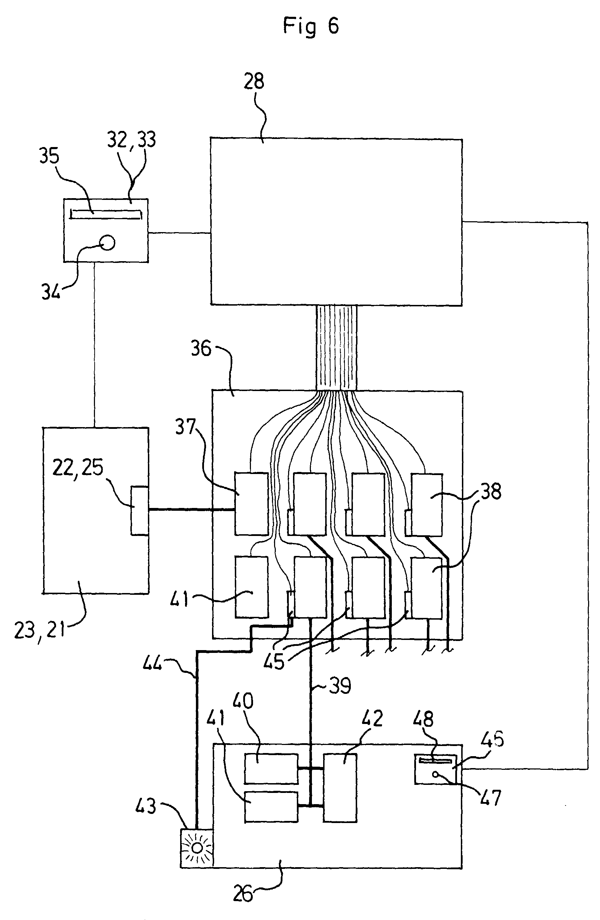

- la figure 6 est un schéma illustrant la liaison entre le serveur central, l'automate central de commutation, des moyens de contrôle d'accès, des moyens de contrôle d'utilisateur, et le système informatique de gestion selon l'invention.

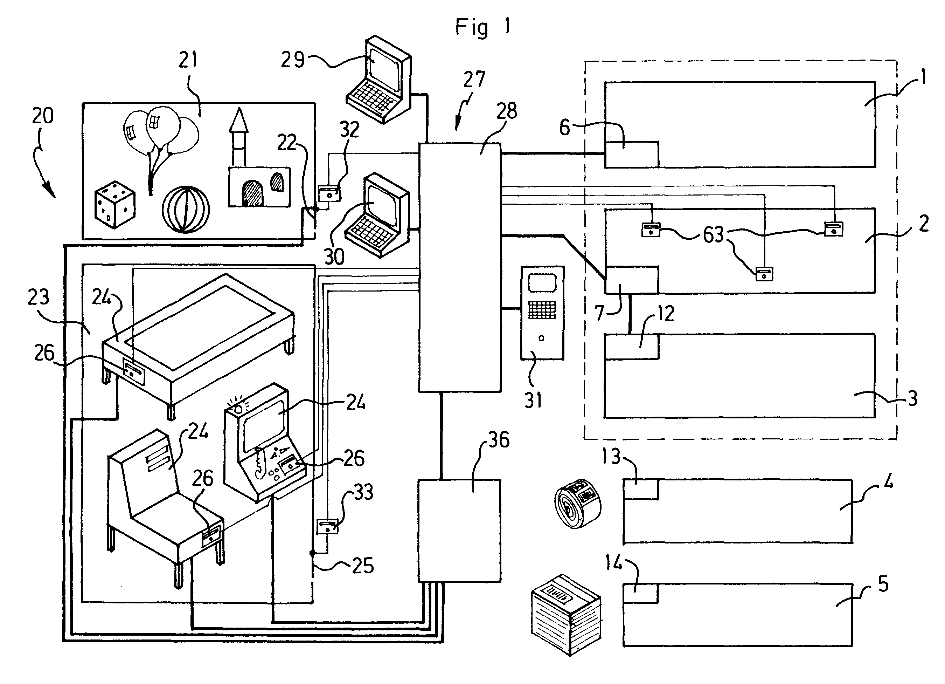

Le site commercial représenté figure 1 comprend une pluralité de commerces 1, 2, 3, 4, 5, tous disposés dans la même zone de chalandise. On a représenté figure 1, l'exemple d'un premier commerce 1 doté d'un premier système informatique d'encaissement 6 autonome permettant de gérer une pluralité de caisses pour l'enregistrement et le paiement des achats de clients de ce commerce.

Un deuxième commerce 2 comprend un deuxième système informatique d'encaissement 7, semblable au précédent.

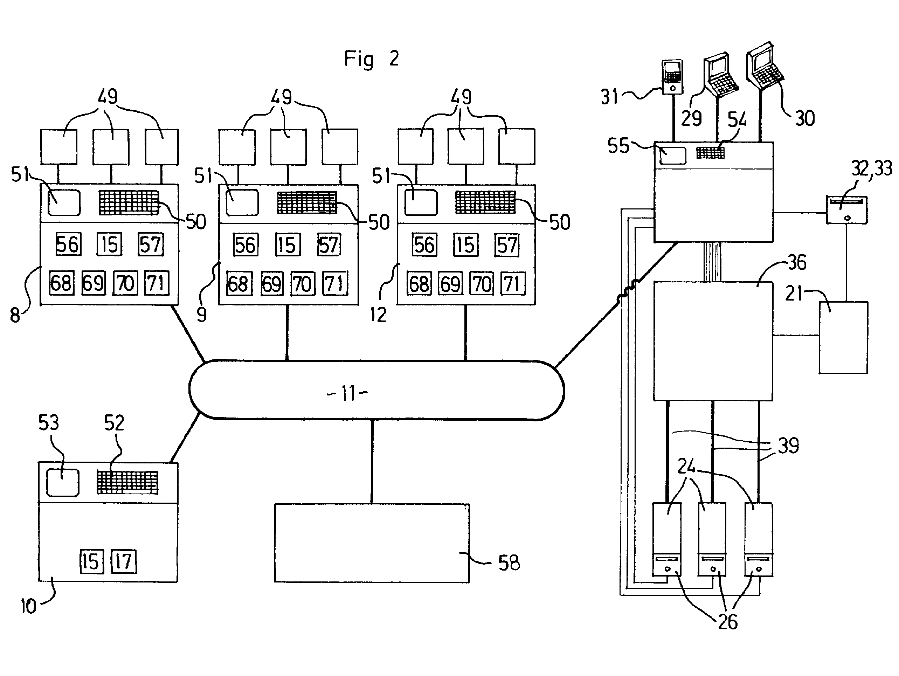

Comme on le voit figure 2, chaque système informatique d'encaissement 6, 7 est en général formé d'une pluralité de serveurs de contrôle 8, 9, 10 reliés les uns aux autres sur un réseau 11 de transmission de données filaires ou non filaires internes (intranet) ou externes (internet). Un tel système informatique est connu en lui-même et il peut s'agir par exemple du système EVOLUTEL ® commercialisé par la société INFOMIL (FRANCE) adapté pour permettre l'attribution d'avantages commerciaux comme décrit par le brevet français FR-2.765.988.

Le troisième commerce 3 comprend, dans l'exemple représenté, un système d'encaissement 12 qui comprend uniquement un serveur de contrôle relié au même réseau 11 que les serveurs de contrôle 8, 9, 10 du deuxième système informatique d'encaissement 7 du deuxième magasin 2.

Les deux autres commerces 4, 5 représentés sont indépendants et comprennent des systèmes d'encaissement 13, respectivement 14, qui comportent ou non un système informatique d'encaissement. Le quatrième commerce 4 comprend un système d'encaissement 13 qui permet l'édition et/ou la gestion d'une carte de fidélité, et le cinquième commerce 5 est un commerce dont le système d'encaissement 14 peut être formé d'une ou plusieurs caisses électroniques et qui, dans le cas le plus général, n'est pas spécifiquement adapté pour l'attribution d'avantages commerciaux aux clients.

Chaque commerce 1, 2, 3, 4, 5 peut être formé par exemple d'un magasin de vente en libre service ou non d'articles de consommation courante, de type grande surface (supermarché, hypermarché, grand magasin), ou de petite surface. L'un ou plusieurs des commerces 1 à 5 peut être un commerce de vente de services (restauration, hôtellerie, cinéma, agence de voyages, soins corporels, garage d'entretien ou de réparation de véhicules, salles de sport, agence immobilière, banque, ...).

Un site commercial selon l'invention peut comporter uniquement des magasins du type du premier ou deuxième commerce 1, 2, (dotés d'un système informatique d'encaissement autonome gérant une pluralité de caisses) ou uniquement au contraire des magasins du type du quatrième commerce 4 ou du cinquième commerce 5, ou un mélange de commerces de ces différents types.

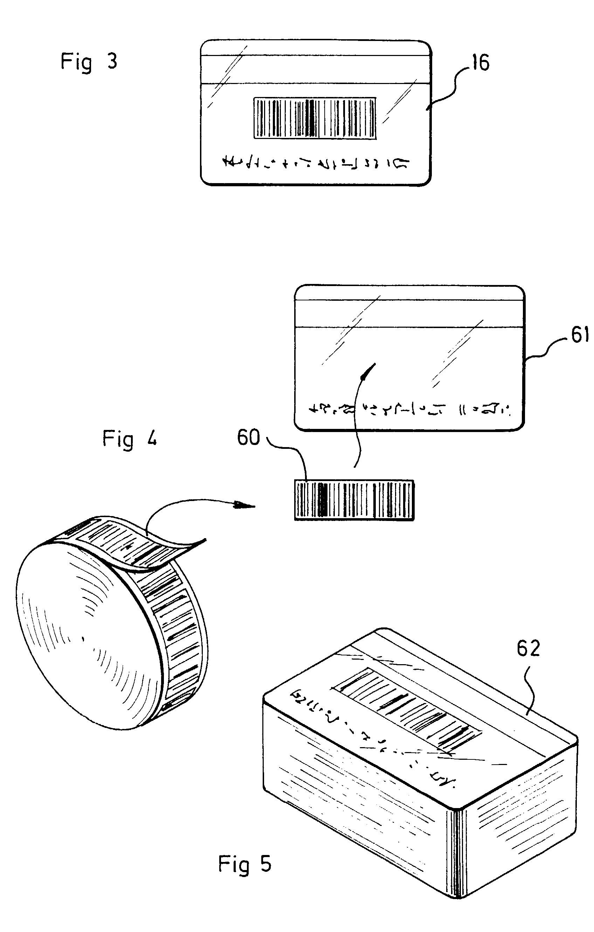

Lorsqu'au moins un système informatique d'encaissement 6, 7 est prévu, celui-ci comporte avantageusement au moins un serveur de contrôle 10, dit serveur clients 10, permettant de mémoriser des données d'identification de chaque client du commerce. Dans l'exemple représenté figure 2, aucune caisse n'est reliée à ce serveur clients 10 qui est dédié à l'émission en temps réel et à la gestion de cartes individuelles fournies aux clients et pouvant être présentées par les clients au niveau des caisses lors des transactions d'achat. Le serveur clients 10 permet d'effectuer des programmes de sélection de données, notamment des sélections de clients destinées à des opérations commerciales ou de mercatique. Ce serveur clients 10 peut être traditionnellement constitué d'un micro-ordinateur comprenant une unité centrale et des périphériques (clavier 52, écran 53, mémoire de masse fixe, lecteur de support d'enregistrements de mémoire, ...). Sur la mémoire de masse de ce serveur clients 10 est mémorisé un fichier, dit fichier cartes 15, dans lequel sont enregistrés des codes numériques permettant d'identifier individuellement des cartes 16 d'identification des clients du commerce (figure 3). Les cartes 16 sont des cartes de fidélité distribuées au client et permettent d'identifier individuellement chaque client du commerce. Le code correspondant à chaque carte 16 est avantageusement un code de type graphique pouvant être lu par des moyens optoélectroniques de lecture, notamment un code à barres pouvant être lu par un lecteur de codes à barres (par exemple codes universels du type dit UPC). Egalement, un fichier, dit fichier foyers 17, est mémorisé sur la mémoire de masse du serveur client 10. Ce fichier foyers 17 comprend un ensemble d'informations d'identification des différents clients identifiés par leur carte 16 dans le fichier cartes 15, et regroupés par foyer. Chaque enregistrement du fichier foyers 17 comprend donc les différents numéros de codes correspondant aux différentes cartes 16 émises pour les membres du même foyer, et, pour chaque numéro de carte, des informations personnelles concernant ce membre (nom, prénom, adresse, âge, ...).

Le site commercial représenté figure 1 comprend, en outre, un espace de loisirs 20 qui est disposé à proximité immédiate de l'un au moins des commerces 1, 2, 3, 4, 5, par exemple attenant à l'entrée du commerce 2 formé d'un magasin de vente en libre service de grande surface. Cet espace de loisirs comprend, dans l'exemple représenté, une zone 21 close dotée d'un portillon d'accès 22 à cette zone 21, et une zone 23 comprenant une pluralité de machines 24 de fourniture de services et/ou de produits. Par exemple, les machines 24 sont des machines de jeux (jeux de boules ou de palet, billards, billards électroniques, jeux vidéo, jeux virtuels, ...). De préférence, la zone 23 est également délimitée, close, et comprend un portillon d'accès 25, bien que cela ne soit pas strictement nécessaire dans la mesure où chaque machine 24 que cette zone 23 renferme est elle-même dotée de moyens 26 de contrôle d'utilisation de cette machine.

L'espace de loisirs 20 comprend en outre un système informatique de gestion 27 comprenant un serveur central 28 qui peut être constitué d'un micro-ordinateur comprenant une unité centrale et des périphériques (claviers 54, écrans 55, mémoire de masse fixe, lecteurs de support d'enregistrement de mémoire, ...), et qui est relié sur le réseau 11 de l'un au moins 7 des systèmes informatiques d'encaissement des commerces du site commercial. Un poste ou une station de travail 29, disposé à proximité de la zone 21, notamment à l'entrée du portillon 22, est relié au serveur central 28. De même, un poste ou une station de travail 30, disposé à proximité de la zone 23, notamment à l'entrée du portillon 25, est également relié au serveur central 28. De la sorte, on peut accéder au système informatique de gestion 27 à l'entrée de chacune des zones 21, 23. Les postes 29, 30 sont des terminaux d'ordinateur ou des micro-ordinateurs adaptés pour permettre la saisie et la consultation d'informations comme indiqué ci-après.

Par ailleurs, au moins une borne 31 de consultation est également reliée au serveur central 28. Une telle borne de consultation 31 peut être disposée à l'intérieur de l'une ou l'autre des zones 21, 23 ou à différents endroits du site commercial pour permettre aux utilisateurs de réaliser certaines consultations relatives à l'utilisation des loisirs dans les zones 21, 23 (crédit de points, informations personnelles, ...).

Chaque portillon 22, 25 d'accès à une zone 21, 23 est refermé et verrouillé par une serrure électrique commandée par un relais qui est lui-même piloté par un automate central de commutation 36. Par ailleurs, à proximité de chaque portillon 22, 25, il est prévu un dispositif 32, respectivement 33, de saisie des données d'identification d'un utilisateur qui souhaite pénétrer dans la zone 21, 23. Ce dispositif 32, 33 comprend un lecteur de codes à barre 34 apte à lire un code d'identification figurant sur une carte 16 d'identification, et un écran d'affichage 35. Chaque dispositif 32, 33 est relié directement au serveur central 28 pour lui transmettre les données d'identification saisies et recevoir les données à afficher sur l'écran 35, notamment le crédit des points de l'utilisateur préalablement identifié.

L'automate central de commutation 36 permet également de piloter les différentes machines 24 de la zone 23, et ce à partir du serveur central 28. Pour ce faire, l'automate 36 comprend, pour chaque machine, un relais 38 commandé par le serveur central 28 et relié par un câble 39 aux moyens 26 de contrôle d'utilisation de la machine 24. Les machines 24 sont des machines de type à prépaiement, connu en soi, incorporant un monnayeur 40 et/ou un bouton de service interne 41 permettant d'activer la machine 24 pour les besoins de la maintenance. Le monnayeur 40 et/ou le bouton de service 41 est relié à la carte principale 42 de la machine qui commande son fonctionnement. Le câble 39 est connecté entre le monnayeur 40 et/ou le bouton de service 41 et la carte principale 42 de la machine, de sorte que le fonctionnement de la machine 24 est piloté à partir du relais 38. De la sorte, le serveur central 28 peut faire fonctionner la machine 24 aussi longtemps que cela est souhaité et avec un nombre de parties ou de produits ou services fournis quelconques. En général, la durée de fonctionnement d'une machine 24 est spécifique à ses propres caractéristiques de fonctionnement (par exemple durée d'une partie de jeu, score de l'utilisateur, durée de la prestation service fournie (par exemple prises de vues photographiques et tirages de celles-ci)...). Par contre, le nombre de parties ou de produits ou services fournis est contrôlé par le serveur central 28 par un paramètre prédéfini enregistré dans un fichier, dit fichier machines, dans lequel sont définies les caractéristiques d'utilisation de chaque machine.

Le serveur central 28 comprend donc un fichier machines répertoriant chacune des machines 24 et gérant leur fonctionnement via l'automate central de commutation 36. Dans ce fichier machines, chaque enregistrement correspond à une machine 24 et comprend : un nom de machine, un code d'identification de la machine propre au système informatique de gestion ; une adresse logique pour l'automate 36 (numéro de relais 38 auquel elle est reliée) ; un numéro de série de la machine ; un coût en points représentant le nombre de points débités pour chacune des séquences d'utilisation de la machine (nombre de points débités à chaque accès effectué par un utilisateur sur la machine) ; une durée d'utilisation de la machine sans nouveau débit de points (permettant de limiter la durée d'utilisation à partir du serveur central 28 nonobstant le paramétrage ou le fonctionnement de la machine elle-même) ; des champs permettant le fonctionnement de la machine en mode promotionnel dans lequel le coût en points et/ou la durée d'utilisation peuvent être paramétrés (par exemple : la machine peut fonctionner à 50 % de son coût en points pendant une durée trois fois supérieure), et la valeur, la date, l'heure du début et de la fin du mode promotionnel ; une description de la machine ; des données de paramétrage du signal adressé à la machine en vue de son démarrage (nombre de joueurs, action par l'utilisateur sur un bouton spécifique, nombre d'impulsions à fournir à la machine pour la mettre en route et temps d'attente entre deux impulsions).

Chaque machine 24 est vue comme un périphérique par le serveur central 28, et un port logique de communication, interne au serveur central 28, est attribué à la machine. Le numéro de ce port est mémorisé dans le champ adresse logique de l'enregistrement de la machine 24 dans le fichier machines. Ce numéro de port permet d'identifier le relais 38 de l'automate central de commutation 36 correspondant à la machine 24.

En outre, les machines 24 peuvent être gérées par famille et sous-famille simultanément, par type de machine, et/ou par lieu d'implantation dans la zone 23. Dans ce cas, le fichier machines comprend également un code d'identification de la famille et/ou de la sous-famille de chaque machine 24.

Les moyens 26 de contrôle d'utilisation de chaque machine 24 comportent un dispositif 46 de reconnaissance des données d'identification d'un utilisateur comprenant un lecteur de codes à barres 27 et un écran d'affichage 48. Ce dispositif 46 est relié directement par un câble spécifique au serveur central 28 de façon à pouvoir lui fournir des données correspondant à un code d'identification d'un utilisateur lu sur le lecteur 47, et en recevoir les informations à afficher sur l'écran 48, notamment le solde de points de l'utilisateur identifié ou un message de non-identification.

Par ailleurs, la machine 24 porte avantageusement également un signal lumineux et/ou sonore 43 indiquant que cette machine 24 est en promotion. Ce signal 43 est relié par un câble 44 à l'automate central de commutation 36 qui comprend un relais 45 commandé par un signal qu'il reçoit du serveur central 28. En variante ou en combinaison le signal de promotion peut être affiché sur l'écran 48.

Le serveur central 28 est relié au réseau 11 du système d'encaissement 7 de l'un au moins 2, 3 des commerces. Ce système d'encaissement 7 est formé dans l'exemple représenté figure 2 d'une pluralité de serveurs de contrôle 8, 9, 12 auxquels sont connectées plusieurs caisses 49, en boucle ou en étoile. Chaque serveur de contrôle 8, 9, 12 est essentiellement constitué d'unités centrales de micro-ordinateurs traditionnelles comprenant au moins une carte mère à microprocesseur, des mémoires vives et mortes, une mémoire de masse et les différentes cartes d'interface nécessaires à son fonctionnement et à sa connexion au réseau 11 et aux différentes caisses 49 associées. Les différents serveurs de contrôle 8, 9, 12 sont semblables, c'est-à-dire sont adaptés pour effectuer les mêmes fonctions vis-à-vis des caisses 49 et fonctionner sur le réseau commun 11. En particulier, ils sont programmés de la même façon, c'est-à-dire que les mêmes programmes sont chargés et activés sur les différents serveurs de contrôle et ces différents serveurs de contrôle partagent les mêmes fichiers de données communes qui peuvent être enregistrées soit sur l'un des serveurs de contrôle (et accédés sur les différents serveurs via le réseau), soit, de préférence dupliqués sur les mémoires de masse de chacun des serveurs de contrôle. Avantageusement, l'un 8 des serveurs de contrôle, généralement dénommé concentrateur, est programmé pour gérer l'ensemble du réseau 11 et notamment pour dupliquer les différentes informations et données sur les différents serveurs de contrôle 8, 9, 12, à l'identique et en temps réel. En outre, le serveur de contrôle 8 concentrateur présente une interface utilisateur sous la forme d'un clavier 50 et d'un écran 51, alors qu'en général les autres serveurs de contrôle, gérés en esclave via le réseau 11 par le concentrateur 8, ne comportent pas d'écran ni de clavier. Le serveur client 10 est également réalisé sous forme d'un micro-ordinateur et comprend de préférence une interface utilisateur (clavier 52 et écran 53). Le serveur central 28 du système informatique de gestion 27 comprend également de préférence une interface utilisateur, sous forme d'un clavier 54 et d'un écran 55. Il est à noter que ce serveur central 28 qui est également sous la forme d'un micro-ordinateur traditionnel ou d'une station de travail peut être confondu avec le serveur client 10. Les serveurs de contrôle 8, 9, 12 des caisses 49 et le serveur central 28 sont reliés en permanence et en temps réel sur le réseau 11.

Un système informatique 58 de gestion interne (comptabilité, gestion de fournisseurs, ....) d'au moins un commerce 2, 3 peut également être relié sur le même réseau 11, notamment pour fournir les différentes données nécessaires au fonctionnement des serveurs de contrôle 8, 9, 12 du système d'encaissement 7.

Les différents serveurs reliés au réseau 11 fonctionnent avec des systèmes d'exploitation compatibles entre eux, notamment les systèmes d'exploitation connus Unix SCO ® et Windows NT ®, avec le protocole TCP/IP. De préférence, le serveur central 28 est adapté pour ne dialoguer à travers le réseau 11 qu'avec le serveur de contrôle 8 concentrateur qui se charge d'assurer la cohérence et l'intégrité de toutes les données. Les échanges d'information sur le réseau 11 sont effectués grâce aux fonctionnalités du protocole TCP/IP RPC ("remote procedure call") sur le réseau 11 qui peut être par exemple un réseau éthernet, chacun des serveurs relié sur le réseau disposant d'une carte réseau traditionnelle.

Chaque serveur de contrôle 8, 9, 12 du système d'encaissement 7 comprend un fichier articles 56 contenant les informations des différents articles (code, prix, ...) du commerce, un fichier LOG 57, propre à chaque serveur de contrôle, qui recense tous les événements intervenant sur les caisses 49 qui lui sont associées, et notamment les données relatives aux différents tickets de caisse imprimés (numéro de ticket de caisse, numéro de caisse, numéro de caissière, ...).

Chaque serveur de contrôle 8, 9, 12 comprend en outre un ensemble de fichiers 68, 69, 70, 71, tous dupliqués sur les différents serveurs de contrôle 8, 9, 12 à l'identique, permettant d'attribuer des points aux clients, lors de leur passage en caisse, selon des critères prédéterminés relatifs à leurs achats effectués lors dudit passage en caisse, ou lors de leurs achats antérieurs, ou selon des critères individuels relatifs à chaque client (âge, sexe, domicile, ...), et ce comme décrit dans la demande de brevet français FR-2.765.988 par exemple.

Une des façons les plus simple d'attribuer des points aux clients consiste à attribuer un nombre de points proportionnel au montant total des achats effectués lors d'une transaction d'achat dans le commerce. Bien sûr, d'autres critères peuvent être utilisés en variante ou en combinaison.

Les points attribués à chaque client sont mémorisés dans les serveurs de contrôle 8, 9, 12 sous forme d'un compte numérique dont la valeur est considérée comme des points. Après chaque transaction d'achat d'un client, la valeur de ce compte de points est transmise via le réseau 11 au serveur central 28 du système informatique de gestion.

Le serveur central 28 comprend ainsi un fichier, dit fichier utilisateurs, répertoriant les informations d'identification concernant les différents utilisateurs de l'espace de loisirs 20. Chaque enregistrement de ce fichier comprend un code d'identification, le nom de l'utilisateur, le prénom de l'utilisateur, sa date de naissance, la date d'émission de l'enregistrement, le compte des points attribués à l'utilisateur, les coordonnées personnelles de l'utilisateur (adresse...), le numéro de sa carte 16 d'identification dans le système d'encaissement 7 du commerce, le profil de cet utilisateur (en relation avec le fichier des caractéristiques d'utilisation des machines), et le numéro du foyer de cet utilisateur tel que mémorisé dans le fichier foyers 17, ou tel que saisi à l'ouverture de l'enregistrement si l'utilisateur n'est pas un client enregistré dans un système d'encaissement informatique 6, 7 de commerce.

Ce fichier utilisateurs peut comprendre également un certain nombre de champs permettant d'autoriser des transferts de points d'une carte à une autre au sein d'un même foyer, notamment pour les enfants mineurs. Ces champs sont par exemple la date d'autorisation, son heure, le pourcentage de transfert de points autorisés à partir d'une carte tierce, et le numéro de la carte de laquelle les points peuvent être transférés.

Le serveur central 28 peut également comprendre un fichier spécifique permettant de gérer les transferts de points d'une carte à une autre. Chaque enregistrement de ce fichier comprend alors la date de la transaction, son heure, le numéro de code identifiant l'utilisateur dans le fichier utilisateurs, le montant du débit de points ou le montant du crédit de points affectés à cet utilisateur.

Lorsque l'utilisateur n'est pas un client référencé dans le fichier cartes 15 du système informatique d'encaissement d'un commerce, il peut néanmoins être identifié dans le fichier utilisateurs par un enregistrement spécifique. Le numéro du code d'identification de cet enregistrement dans ce fichier utilisateurs correspond au numéro d'identification de cet utilisateur. A la création de l'enregistrement, il est aussi possible d'attribuer, via le réseau 11, à l'utilisateur un numéro de carte d'identification disponible pouvant l'identifier dans le fichier cartes 15 du système informatique 7 d'encaissement d'un commerce, et un enregistrement correspondant est créé dans le fichier cartes 15. Le numéro du code d'identification et/ou le numéro de la carte d'identification de l'utilisateur dans le système d'encaissement 7 du commerce est porté -de préférence sous forme d'un code à barres- sur une carte telle qu'une carte 16 qui peut être fournie à l'utilisateur lors de la création de cet enregistrement en vue de l'utilisation de l'espace de loisirs. Ainsi, le code identifiant chaque enregistrement dans le fichier utilisateurs et/ou le numéro de carte d'identification de l'utilisateur est un code, dit code utilisateur qui est, dans tous les cas mémorisé dans le fichier utilisateurs. De préférence, ces codes utilisateur sont formés de valeurs représentatives de codes graphiques pouvant être lus par des moyens optoélectroniques de lecture (lecteur de codes à barres). Les cartes 16 distribuées aux utilisateurs sont alors dotées d'un code graphique tel qu'un code à barres pouvant être lu par des moyens optoélectroniques de lecture.

Ce code graphique peut aussi être porté sur une étiquette 60 qui peut être collée sur une carte de fidélité d'un commerce 4, par le commerçant lors d'une transaction d'achat ou plus généralement lors d'une fréquentation de ce commerce 4 par l'utilisateur. Pour utiliser l'espace de loisirs 20, l'utilisateur n'aura alors qu'à présenter sa carte 61 de fidélité dotée de l'étiquette 60. Les étiquettes 60 sont de préférence éditées préalablement par le serveur central 28 et fournies au commerce 4, de sorte que chacun des codes correspondant à une étiquette 60 est mémorisé et réservé pour un enregistrement d'utilisateur dans le fichier utilisateurs du serveur central 28.

On édite les étiquettes 60 à partir du fichier utilisateurs dans lequel on crée un certain nombre d'enregistrements de clients théoriques non encore personnellement identifiés. Un fichier étiquettes est mémorisé sur le serveur central 28, comprenant pour chacun de ses enregistrements correspondant à une étiquette les champs suivants :
- un code d'utilisateur, identique à l'un des codes utilisateur du fichier utilisateurs précédemment créé pour un client théorique, et servant de code d'identification d'une étiquette,
- nom, prénom, date de naissance, coordonnées personnelles d'un futur utilisateur (ces champs étant libres et n'étant renseignés qu'ultérieurement),
- nom d'identification du commerce 4 auquel l'étiquette est délivrée en vue d'une distribution à l'un de ses clients,
- nombre de points crédité pour cette étiquette.

Lorsque l'utilisateur se présente pour la première fois dans l'espace de loisirs 20, le code de son étiquette 60 est reconnu par le système informatique de gestion 27, mais, en l'absence de saisie des informations personnelles de cet utilisateur, invitation lui est faite de se présenter à l'accueil en vue de la saisie de ces informations. Après saisie de ces informations personnelles, l'utilisateur peut avoir accès à l'espace de loisirs 20. De préférence, chacun des enregistrements correspondant aux étiquettes 60 est crédité au préalable d'un nombre prédéterminé de points permettant à l'utilisateur d'utiliser pour la première fois l'espace de loisirs. Ainsi, les étiquettes 60 distribuées par le commerce 4 correspondent non seulement à un code utilisateur, mais également à un forfait initial de points.

En variante, lorsque le commerce 5 ne délivre pas normalement des cartes de fidélité à ses clients, les codes utilisateurs peuvent être édités sur des cartes d'identification spécifiques à l'espace de loisirs 20 distribuées simplement lors de la fréquentation du commerce 5 au client. Là encore, ces codes utilisateurs correspondent à des enregistrements réservés dans le fichier utilisateurs du serveur central 28, avec un nombre prédéterminé de points crédités dans chacun de ces enregistrements. Pour pouvoir utiliser ce crédit de points, l'utilisateur doit au préalable se présenter à l'accueil afin de saisir les informations qui le concernent. L'édition de ces cartes est identique à celle des étiquettes 60, seul le support étant différent. En variante, d'autres types de supports que des cartes ou des étiquettes peuvent être utilisés pour porter les codes utilisateurs (badges, plaquettes, porte-clés, clés...).

Dans une variante de l'invention, des coupons 62 peuvent être utilisés sans identification préalable de l'utilisateur ni saisie de cette identification dans le fichier utilisateurs. Autrement dit, dans cette variante, les coupons 62 sont représentatifs d'une valeur prédéfinie d'un nombre X (égal à 50, 100, ou autre) points éditée sur des coupons 62 tous identiques portant un code graphique représentant cette valeur de points. Le serveur central 28 comprend un fichier dans lequel sont recensés, pour chaque série de coupons 62, la valeur du nombre X de points de chaque coupon 62, le nombre de coupons 62 émis avec cette valeur et un code identifiant le(les) commerce(s) 5 au(x)quel(s) ces coupons 62 sont fournis pour leur distribution aux clients. Lorsque ce code est reconnu par le serveur central 28 lors d'une lecture sur un lecteur 34, 47, il est crédité dans l'enregistrement d'un utilisateur préalablement identifié. Si ce dernier n'est pas préalablement identifié, un message est affiché sur l'écran 35, 48 pour inciter la personne à s'identifier à l'accueil de l'espace de loisirs 20, puis les X points du coupon présenté sont crédités dans le compte de points de son enregistrement dans le fichier utilisateurs.

Une fois qu'un utilisateur est identifié dans le fichier utilisateurs du serveur central 28, son compte de points peut être crédité en pratique de plusieurs façons. Tout d'abord, il peut être crédité à partir des points qui lui sont attribués par le système d'encaissement 67 d'un commerce 1, 2, 3 et/ou distribués au passage d'un système d'encaissement 13, 14 d'un commerce 4, 5, suite à une transaction d'achats comme indiqué précédemment. Egalement, il peut être crédité par simple fréquentation d'un commerce 1, 2, 3. Pour ce faire, le commerce 1, 2, 3 peut être doté de lecteurs 63 des codes graphiques portés par les cartes identifiant les utilisateurs 16, 61, ces lecteurs 63 étant reliés directement au serveur central 28. Ce serveur central 28 peut ainsi être programmé pour créditer un nombre prédéfini de points dans l'enregistrement de chaque utilisateur présentant sa carte d'identification à l'un ou à plusieurs des lecteurs 63 disposés dans le commerce 1, 2, 3. Le crédit de points peut être attribué à chaque présentation de la carte d'identification sur un lecteur spécifique 63 ou après présentation de la carte successivement, dans un ordre ou non, sur plusieurs lecteurs 63 prédéterminés, afin d'imposer un trajet à l'utilisateur dans le commerce 1, 2, 3. De préférence, le serveur central 28 est programmé de sorte que le crédit de points est attribué après présentation sur un lecteur 63 dans le commerce 1, 2, 3 une seule fois par journée calendaire.

Les différents lecteurs 63 répartis au sein d'un commerce pour détecter la fréquentation de différents endroits du commerce 1, 2, 3 par un utilisateur comprennent un lecteur de codes à barres et un écran d'affichage permettant d'informer le client sur les points qu'il vient de gagner ou sur les différents autres endroits qu'il doit fréquenter pour acquérir des points. Sur la figure 1, on a représenté par exemple trois lecteurs 63 répartis dans le commerce 2.

Les clients identifiés dans un système informatique d'encaissement 6, 7 d'un commerce 1, 2, 3 peuvent également se voir attribuer des points automatiquement (par crédit de leur compte de points dans le fichier utilisateurs) alors même qu'ils ne fréquentent pas le commerce. Par exemple, à l'occasion d'un anniversaire, ou à l'occasion d'une opération commerciale publicitaire, ...

Enfin, un utilisateur identifié par le serveur central 28 peut acheter des points directement à l'accueil de l'espace de loisirs.

La zone 21 est exempte de machines de fourniture de services et/ou de produits dotées de moyens de contrôle d'utilisation. Mais cette zone 21 renferme des moyens de fourniture de loisirs -notamment choisis dans le groupe des jouets, jeux, attractions, spectacles, livres, services informatiques, ordinateurs, terminaux télématiques, projections de films, diffusions d'enregistrements sonores (musicaux), diffusions d'enregistrement multimédia, ...- pouvant être librement utilisés par les personnes ayant accédé à la zone 21. Mais la zone 21 est close et dotée de moyens 22, 32 de contrôle d'accès commandés par le système informatique de gestion 27 via l'automate 36. Une telle zone 21 est par exemple une zone de jeux pour enfants. La consommation des points dans cette zone 21 correspond en pratique à des temps de présence au sein de la zone 21 par l'utilisateur. Pour gérer cette consommation de points, le serveur central 28 est doté d'un fichier, dit fichier séjour, dont les enregistrements contiennent des informations sur les séjours des personnes présentes dans la zone 21. Chaque enregistrement correspond à un séjour, c'est-à-dire à l'entrée et à la sortie d'un utilisateur dans cette zone 21. Chaque enregistrement contient en particulier les champs suivants : le numéro de code identifiant l'utilisateur dans le fichier utilisateurs, la date d'arrivée de l'utilisateur et l'heure d'arrivée, le nom de l'utilisateur, le prénom de l'utilisateur, sa date de naissance, son âge, le nombre de points affectés au séjour et débités dans le compte de points de l'utilisateur figurant dans le fichier utilisateurs, le cas échéant, les codes d'identification des utilisateurs adultes correspondants et leur lien de parenté, diverses autres informations éventuelles (numéro de pièce d'identité fourni, numéro de téléphone à appeler en cas d'urgence, ...).

Egalement, dans ce fichier séjour ou dans un autre fichier spécifique, la durée d'accès à la zone 21 correspondant à chaque point est mémorisée et peut être éventuellement modifiée. Cette information correspond ainsi au coût en points de la durée d'utilisation de la zone 21. Bien évidemment, ce coût peut être enregistré sous forme d'une valeur fixe ou d'une valeur variable au cours du temps, soit automatiquement, soit par ajustement par le personnel de l'espace de loisirs selon l'affluence.

Grâce à l'invention, les différents clients des commerces 1, 2, 3, 4, 5 peuvent avoir accès à l'espace de loisirs 20 dès lors qu'ils sont enregistrés en tant qu'utilisateurs dans le système central 28 et qu'un support d'identification 16, 61 leur est fourni. Dans le cas où le commerce 5 ne distribue que des coupons 62, une carte d'identification telle qu'une carte 16 peut être délivrée à l'utilisateur lors de son premier accès à l'espace de loisirs 20. Cette carte d'identification comprend le code identifiant l'utilisateur dans le serveur central 28. Il suffit à l'utilisateur de présenter cette carte 16 au lecteur de codes à barres des portillons d'entrée des zones 21, 23, et, le cas échéant, des machines 24, pour pouvoir accéder à ces zones et machines. Selon le crédit de points qui figure dans le compte de points de l'enregistrement de cet utilisateur dans le serveur central 28, ce dernier pourra profiter des produits et/ou services délivrés dans les zones 21, 23.

L'invention permet ainsi notamment aux clients des différents commerces d'accéder eux-mêmes ou de faire accéder leurs enfants, amis ou relations à l'espace de loisirs 20, et ce selon la fréquentation du ou des commerces 1, 2, 3, 4, 5.

Il est à noter également que rien n'empêche de programmer le serveur central 28 pour permettre le libre accès aux zones 21, 23 et aux machines 24 par un utilisateur, sans débit ni crédit de points, si cela s'avère utile. En pratique, il suffit de prévoir un champ dans l'enregistrement utilisateur dans lequel l'accès est autorisé sur simple présentation de la carte de cet utilisateur. Cet accès libre peut être limité dans le temps par un champ de début d'accès libre et un champ de fin d'accès libre dans l'enregistrement.

Il est à noter également que l'invention peut faire l'objet de nombreuses variantes par rapport aux modes de réalisation représentés et décrits. En particulier, le réseau 11 peut être un réseau filaire ou non, un réseau interne (de type intranet) ou externe (de type réseau extranet, réseau commuté téléphonique, ligne spécialisée, numéris ®, internet ou autre) ; les machines 24 peuvent être de diverses natures ; le nombre de zones 21, 23 et leurs emplacements peuvent varier ; la zone 23 de machines 24 peut être gérée aussi comme la zone 21 (selon le temps de présence et non seulement selon le nombre d'utilisation des machines 24) ; le site commercial peut comprendre plusieurs espaces de loisirs 20 semblables ou différents répartis ; les zones 21, 23 peuvent comprendre un signal de promotion commandé par l'automate 36 ; les données d'identification peuvent être saisies manuellement par les utilisateurs sur des claviers prévus à cet effet par exemple sur les bornes de consultation 31 ; ....

## Revendications

1. Site commercial comprenant au moins un commerce (1, 2, 3, 4, 5) équipé d'un système d'encaissement (6, 7, 12, 13, 14) pour l'enregistrement et le paiement des achats, au moins un espace de loisirs (20) disposé à proximité immédiate d'au moins un commerce, cet espace de loisirs (20) comprenant au moins une zone (21, 23) close dotée de moyens (22, 25, 32, 33) de contrôle d'accès à cette zone, et/ou au moins une machine (24) de fourniture de services et/ou de produits dotée de moyens (26) de contrôle d'utilisation de la machine, caractérisé :
- en ce que les moyens (24, 25, 32, 33) de contrôle d'accès d'au moins une zone close et/ou les moyens (26) de contrôle d'utilisation d'au moins une machine (24) comportent des moyens (34, 36) de reconnaissance de données d'identification d'un utilisateur de l'espace de loisirs (20), fournies par cet utilisateur lorsqu'il souhaite accéder à cet espace de loisirs (20),
- en ce que l'espace de loisirs (20) comprend un système informatique, dit système informatique de gestion (27), comprenant des moyens de mémorisation des données d'identification de chaque utilisateur, et pour chaque utilisateur identifié, des moyens de mémorisation d'au moins un compte de points représentatifs d'une durée d'accès à la zone (21, 23) et/ou d'une durée d'utilisation de la machine (24) et/ou d'une quantité de services et/ou de produits fournis par la machine (24), ce système informatique de gestion (27) comprenant un serveur central (28) relié aux moyens (22, 25, 32, 33) de contrôle d'accès et/ou aux moyens (26) de contrôle d'utilisation, ce serveur central (28) étant programmé et adapté pour :
• recevoir les données d'identification d'un utilisateur reconnues par les moyens (34, 46) de reconnaissance, et déterminer si elles correspondent à des données précédemment mémorisées d'un utilisateur identifié,
• commander le fonctionnement des moyens (22, 25, 32, 33) de contrôle d'accès et/ou des moyens (26) de contrôle d'utilisation en autorisant l'accès à la zone (21, 23) et/ou l'utilisation de la machine (24) par un utilisateur uniquement selon le crédit de points dont il dispose dans son compte de points,
• débiter le compte de points d'un utilisateur, à chaque accès à la zone (21, 23) par cet utilisateur d'une valeur prédéterminée selon la durée d'accès à la zone (21, 23) par cet utilisateur et/ou à chaque utilisation de la machine (24) par cet utilisateur d'une valeur prédéterminée selon la durée d'utilisation de la machine (24) par cet utilisateur et/ou selon la quantité de services et/ou de produits fournis par la machine (24) à cet utilisateur,
- et en ce que le système d'encaissement (6, 7, 12, 13, 14) d'au moins un commerce (1, 2, 3, 4, 5) est doté de moyens (8, 9, 10, 12, 60, 62) d'attribution de points permettant d'attribuer à un client, lors d'une fréquentation du commerce (1, 2, 3, 4, 5) par ce client, un crédit de points, ces moyens (8, 9, 10, 12) d'attribution de points et ledit système informatique de gestion (27) étant adaptés pour que les points attribués à un client par les moyens (8, 9, 10, 12, 60, 62) d'attribution de points puissent être transmis au système informatique de gestion (27), mémorisés et utilisés par ce système informatique de gestion (27) dans au moins un compte de points d'un utilisateur, de sorte que cet utilisateur peut utiliser l'espace de loisirs (20) selon les points qui ont été préalablement attribués au client par le système d'encaissement (6, 7) d'au moins un commerce (1, 2, 3, 4, 5) du site commercial, et qu'une personne ne disposant pas d'un compte de points ou d'un crédit de points suffisant dans un compte de points des moyens informatiques de gestion (27) ne peut pas utiliser l'espace de loisirs (20).

2. Site commercial selon la revendication 1, caractérisé en ce que les moyens de reconnaissance comportent des moyens (35, 48) d'affichage d'informations reçues du serveur central (28) du système informatique de gestion (27) -notamment le solde des points du compte de points de l'utilisateur identifié ou un message de non-identification-.

3. Site commercial selon l'une des revendications 1 et 2, caractérisé en ce que les données d'identification d'un utilisateur sont représentées par un code graphique pouvant être lu par des moyens optoélectroniques de lecture, et en ce que les moyens (34, 46) de reconnaissance des données d'identification comportent des moyens optoélectroniques de lecture de tels codes graphiques.

4. Site commercial selon l'une des revendications 1 à 3, caractérisé en ce que les moyens (34, 36) de reconnaissance des données d'identification d'un utilisateur comportent des moyens (34, 47) de lecture adaptés pour pouvoir lire des données d'identification inscrites sur un support d'identification (16, 61) présenté par l'utilisateur.

5. Site commercial selon la revendication 4, caractérisé en ce que le support d'identification (16, 61) est une carte au format d'une carte bancaire.

6. Site commercial selon l'une des revendications 4 et 5, caractérisé en ce qu'il comprend au moins un type de support d'identification émis par un commerce (1, 2, 3, 4), dit carte de fidélité (16) portant des données d'identification individuelle d'un client, et en ce que les données d'identification de chaque client inscrites sur chaque carte de fidélité (16) sont mémorisées par ledit système d'encaissement (6, 7) dudit commerce (1, 2, 3, 4).

7. Site commercial selon l'une des revendications 4 à 6, caractérisé en ce qu'il comprend au moins un type de support d'identification qui est un support édité et émis par l'intermédiaire du système informatique de gestion (27) et est spécifique à l'espace de loisirs (20).

8. Site commercial selon l'une des revendications 1 à 7, dans lequel au moins un système d'encaissement (6, 7) d'au moins un commerce (1, 2, 3) comprend un système informatique, dit système informatique d'encaissement (6, 7), comportant :
- des moyens de reconnaissance de données d'identification de clients lors de leur passage par le système d'encaissement,
- des moyens de mémorisation des données d'identification de chaque client,
- pour chaque client identifié, des moyens de mémorisation d'au moins un compte d'avantages commerciaux alloués au client permettant d'attribuer au client un crédit et/ou un débit d'avantages commerciaux, caractérisé en ce que :
- au moins un système informatique d'encaissement (6, 7) et ledit système informatique de gestion (27) comportent des moyens de connexion de l'un à l'autre et de transmission de données entre eux par un réseau (11) de transmission de données,
- lesdits moyens (8, 9, 10, 12) d'attribution de points comprennent, pour chaque client identifié, un compte d'avantages commerciaux dudit système informatique d'encaissement (6, 7) dont la valeur est considérée comme des points, ledit système informatique d'encaissement (6, 7) étant adapté pour pouvoir attribuer des points à un client lors d'une transaction d'achat au système d'encaissement (6, 7), et pour en transmettre la valeur au système informatique de gestion (27) via le réseau (11) après chaque transaction d'achat d'un client.

9. Site commercial selon la revendication 8, caractérisé en ce que les moyens de connexion du système informatique de gestion de l'espace de loisirs sur ledit réseau (11) de transmission de données sont adaptés pour permettre une connexion permanente et une transmission de données en temps réel, et en ce que le système informatique d'encaissement (6, 7) d'un commerce (1, 2, 3) comprend au moins un serveur de contrôle (8, 9, 10) d'au moins une caisse (49) doté de moyens de connexion permanente sur ledit réseau (11) de transmission de données adaptés pour permettre une transmission des données en temps réel.

10. Site commercial selon l'une des revendications 1 à 9, caractérisé en ce que le système informatique de gestion (27) comprend au moins un fichier dans lequel les données d'identification et des informations relatives aux utilisateurs sont mémorisées et regroupées par foyer, chaque foyer regroupant des utilisateurs domiciliés à une même adresse.

11. Site commercial selon l'une des revendications 1 à 10, caractérisé en ce que lesdits moyens d'attribution de points comprennent :
- dans le système informatique de gestion (27) :
. des moyens de mémorisation d'au moins un code, dit code coupon, représentatif d'une valeur prédéfinie d'un nombre X de points pouvant être édités sous forme de coupons (62) de points, et du nombre de coupons (62) de X points édités correspondant à ce code coupon et portant l'inscription de cette valeur de X points,
. des moyens de reconnaissance de la valeur de X points d'un coupon de X points présenté par un utilisateur, adaptés pour créer s'il n'en existe pas déjà, et créditer un compte de points de l'utilisateur d'une valeur de X points dans le serveur central (28),
- dans au moins un commerce (5), un stock de coupons (62) de X points dont le code coupon est mémorisé dans le système informatique de gestion (27), ce stock étant disposé au niveau du système d'encaissement (14) du commerce (5) de façon que les coupons (62) de X points puissent être distribués aux clients du commerce (5) lors des transactions d'achat.

12. Site commercial selon la revendication 11, caractérisé en ce que les moyens de mémorisation d'un code coupon comportent au moins un champ identifiant un commerce auquel les coupons de X points édités sont fournis.

13. Site commercial selon l'une des revendications 11 et 12, caractérisé en ce que le code coupon comprend une valeur représentative d'un code graphique pouvant être lu par des moyens optoélectroniques de lecture, en ce que chaque coupon (62) de X points porte le code graphique correspondant, et en ce que le système informatique de gestion (27) comporte des moyens (34, 37) optoélectroniques de lecture de ce code graphique.

14. Site commercial selon l'une des revendications 1 à 13, caractérisé en ce que le système informatique de gestion (27) comporte des moyens de mémorisation d'au moins une série de codes, dits codes utilisateurs, chaque code utilisateur étant adapté pour pouvoir identifier un utilisateur et repérer un enregistrement d'informations d'identification relatives à cet utilisateur après que ces informations d'identification ont été saisies et mémorisées.

15. Site commercial selon la revendication 14, caractérisé en ce que les codes utilisateurs sont formés de valeurs représentatives de codes graphiques pouvant être lus par des moyens optoélectroniques de lecture et en ce que les moyens (34, 46) de reconnaissance des données d'identification d'un utilisateur comportent des moyens (34, 47) optoélectroniques de lecture de tels codes graphiques.

16. Site commercial selon l'une des revendications 14 et 15, caractérisé en ce qu'il comprend au moins une série de codes utilisateurs éditée en un exemplaire unique sur des supports individuels (60) portant chacun un code utilisateur unique, en ce que les moyens de mémorisation de cette série de codes utilisateurs comprend au moins un champ dont la valeur permet de reconnaître que les codes utilisateurs ont été édités, et en ce qu'au moins un commerce (4) comprend un stock de supports (60) de codes utilisateurs édités, ce stock étant disposé au niveau du système d'encaissement (13) du commerce (4) de façon que les supports (60) de codes utilisateurs puissent être distribués aux clients lors des transactions d'achat.

17. Site commercial selon la revendication 16, caractérisé en ce que les moyens de mémorisation de la série de codes utilisateurs comportent au moins un champ identifiant un commerce (4) auquel les supports (60) de codes utilisateurs sont fournis.

18. Site commercial selon l'une des revendications 16 et 17, caractérisé en ce que les supports (60) de codes utilisateurs sont formés d'étiquettes autocollantes.

19. Site commercial selon l'une des revendications 16 à 18, caractérisé en ce que les moyens de mémorisation d'une série de codes utilisateurs comportent au moins un champ représentatif d'une valeur prédéfinie d'un nombre de X points pouvant, lors de la création d'un compte de points d'un utilisateur présentant pour la première fois un support (60) de codes utilisateurs, être créditée dans ledit compte de points de l'utilisateur identifié par ledit code utilisateur.

20. Site commercial selon l'une des revendications 1 à 19, caractérisé en ce que l'espace de loisirs (20) comprend au moins une zone (21) close dotée de moyens (22, 32) de contrôle d'accès, et exempte de machine de fourniture de services et/ou de produits et dotée de moyens de contrôle d'utilisation, cette zone (21) renfermant des moyens de fourniture de loisirs - notamment choisis dans le groupe des jeux, jouets, attractions, spectacles, livres, services informatiques, ordinateurs, terminaux télématiques, projections de films, diffusions d'enregistrements sonores (notamment musicaux), diffusions d'enregistrements multimédia- pouvant être librement utilisés par les personnes ayant accédé à cette zone (21).

21. Site commercial selon l'une des revendications 1 à 20, caractérisé en ce que l'espace de loisirs (20) comprend au moins une zone (23) close dotée de moyens (25, 33) de contrôle d'accès et renfermant au moins une machine (24) de fourniture de services et/ou de produits dotés de moyens (26) de contrôle d'utilisation.

22. Site commercial selon l'une des revendications 1 à 21, caractérisé en ce que l'espace de loisirs (20) comprend au moins une machine (24) de fourniture de services et/ou de produits dotés de moyens de contrôle d'utilisation et qui est disposée dans une zone libre d'accès.

23. Site commercial selon l'une des revendications 1 à 22, caractérisé en ce que chaque zone (21, 23) et/ou chaque machine (24) de l'espace de loisirs (20) est commandée par le système informatique de gestion (27).

24. Site commercial selon l'une des revendications 1 à 23, caractérisé en ce que le système informatique de gestion (27) comprend un automate central de commutation (36) relié au serveur central (28) du système informatique de gestion (27) et piloté par ce serveur central (28), les moyens (26) de contrôle d'utilisation de chaque machine (24) et les moyens (22, 25, 32, 33) de contrôle d'accès de chaque zone (21, 23) close étant reliés par un câble à l'automate central de commutation (36), de sorte que le serveur central (28) pilote les moyens (26) de contrôle d'utilisation et les moyens (22, 25, 32, 33) de contrôle d'accès via l'automate central de commutation (36).

25. Site commercial selon l'une des revendications 1 à 24, caractérisé en ce que le système informatique de gestion (27) est adapté pour pouvoir commander individuellement le fonctionnement de moyens (43) de signalisation solidaires d'une zone (21, 23) ou d'une machine (24) aptes à signaler un mode de fonctionnement spécial -notamment promotionnel- de cette zone (21, 23) ou machine (24).

26. Site commercial selon l'une des revendications 1 à 25, caractérisé en ce que le système informatique de gestion (27) comporte au moins un poste (29, 30) de saisie/consultation adapté pour permettre la saisie d'informations relatives à un utilisateur, la création d'un compte de points pour un utilisateur, la délivrance d'un support de données d'identification ou d'un code utilisateur à un utilisateur, la modification et/ou la consultation par un utilisateur d'informations mémorisées dans le système informatique de gestion (27) -notamment l'attribution manuelle ou automatique de points du compte de points d'un utilisateur dans au moins un compte de points d'un autre utilisateur, et la consultation du solde de son compte de points- par un utilisateur.

27. Système informatique de gestion (27) d'au moins un espace de loisirs (20) disposé dans un site commercial, à proximité immédiate d'au moins un commerce (1, 2, 3, 4, 5), cet espace de loisirs (20) comprenant au moins une zone (21, 23) close dotée de moyens (22, 25, 32, 33) de contrôle d'accès à cette zone (21, 23), et/ou au moins une machine (24) de fourniture de services et/ou de produits dotés de moyens (26) de contrôle d'utilisation de la machine, caractérisé :
- en ce que les moyens (22, 25, 32, 33) de contrôle d'accès d'au moins une zone close et/ou les moyens (26) de contrôle d'utilisation d'au moins une machine (24) comportent des moyens (34, 46) de reconnaissance de données d'identification d'un utilisateur de l'espace de loisirs (20), fournies par cet utilisateur lorsqu'il souhaite accéder à cet espace de loisirs (20),
- en ce qu'il comporte des moyens de mémorisation de données d'identification de chaque utilisateur de l'espace de loisirs (20), et, pour chaque utilisateur identifié, des moyens de mémorisation d'au moins un compte de points représentatifs d'une durée d'accès à la zone et/ou d'une durée d'utilisation de la machine et/ou d'une quantité de services et/ou de produits fournis par la machine, ce système informatique de gestion (27) comprenant un serveur central (28) relié aux moyens (22, 25, 32, 33) de contrôle d'accès et/ou aux moyens (26) de contrôle d'utilisation, ce serveur central (28) étant programmé et adapté pour :
• recevoir les données d'identication d'un utilisateur reconnues par les moyens (34, 46) de reconnaissance, et déterminer si elles correspondent à un utilisateur préalablement identifié,
• commander le fonctionnement des moyens de contrôle d'accès et/ou des moyens de contrôle d'utilisation en autorisant l'accès à la zone (21, 23) et/ou l'utilisation de la machine (24) par un utilisateur uniquement selon le crédit de points dont il dispose dans son compte de points,
• débiter le compte de points d'un utilisateur, à chaque accès à la zone (21, 23) par cet utilisateur d'une valeur prédéterminée selon la durée d'accès à la zone (21, 23) par cet utilisateur et/ou à chaque utilisation de la machine (24) par cet utilisateur d'une valeur prédéterminée selon la durée d'utilisation de la machine (24) par cet utilisateur et/ou selon la quantité de services et/ou de produits fournis par la machine (24) à cet utilisateur,
- et en ce qu'il est adapté pour que des points attribués à un client par au moins un commerce (1, 2, 3, 4, 5) puissent être transmis, mémorisés et utilisés dans au moins un compte de points d'un utilisateur, de sorte que cet utilisateur peut utiliser l'espace de loisirs (20) selon les points qui ont été préalablement attribués au client par au moins un commerce du site commercial, et qu'une personne ne disposant pas d'un compte de points ou d'un crédit de points suffisant dans un compte de points des moyens informatiques de gestion (27) ne peut pas utiliser l'espace de loisirs (20).

28. Système informatique de gestion selon la revendication 27, caractérisé en ce que les moyens (34, 46) de reconnaissance comportent des moyens d'affichage d'informations reçues du serveur central (28) du système informatique de gestion (27) -notamment le solde des points du compte de points de l'utilisateur identifié ou un message de non-identification-.

29. Système informatique de gestion selon l'une des revendications 27 et 28, caractérisé en ce que les données d'identification d'un utilisateur sont représentées par un code graphique pouvant être lu par des moyens optoélectroniques de lecture, et en ce que les moyens (34, 46) de reconnaissance des données d'identification comportent des moyens optoélectroniques de lecture de tels codes graphiques.

30. Système informatique de gestion selon l'une des revendications 27 à 29, caractérisé en ce que les moyens (34, 46) de reconnaissance des données d'identification d'un utilisateur comportent des moyens de lecture adaptés pour pouvoir lire des données d'identification inscrites sur un support d'identification présenté par l'utilisateur.

31. Système informatique de gestion selon la revendication 30, caractérisé en ce que le support d'identification est une carte (16, 61) au format d'une carte bancaire.

32. Système informatique de gestion selon l'une des revendications 30 et 31, caractérisé en ce qu'il comprend au moins un type de support d'identification émis par un commerce (1, 2, 3, 4), dit carte de fidélité (16) portant des données d'identification individuelle d'un client, et en ce que les données d'identification de chaque client inscrites sur chaque carte de fidélité (16) sont mémorisées par ledit système d'encaissement (6, 7) dudit commerce (1,2,3,4).

33. Système informatique de gestion selon l'une des revendications 30 et 32, caractérisé en ce qu'il comprend au moins un type de support d'identification qui est un support édité et émis par l'intermédiaire du système informatique de gestion (27) et est spécifique à l'espace de loisirs (20).

34. Système informatique de gestion selon l'une des revendications 27 à 33, caractérisé en ce qu'il comprend des moyens de connexion à un réseau (11) de transmission de données auquel au moins un système informatique d'encaissement (6, 7) d'au moins un commerce (1, 2, 3) est relié, de sorte que les points attribués aux clients par le système informatique d'encaissement (6, 7) lors de la fréquentation du commerce (1, 2, 3) peuvent être transmis via le réseau (11) au système informatique de gestion (27).

35. Système informatique de gestion selon la revendication 34, caractérisé en ce qu'il est connecté à un réseau (11) de transmission de données, auquel est connecté au moins un serveur de contrôle (8, 9, 12) d'au moins une caisse (49) d'au moins un système informatique d'encaissement (6, 7) d'un commerce (1, 2, 3).

36. Système informatique de gestion selon l'une des revendications 27 à 35, caractérisé en ce qu'il comprend au moins un fichier dans lequel les données d'identification et les informations relatives aux utilisateurs sont mémorisées et regroupées par foyer, chaque foyer regroupant des utilisateurs domiciliés à une même adresse.

37. Système informatique de gestion selon l'une des revendications 27 à 36, caractérisé en ce qu'il comporte :
- des moyens de mémorisation d'au moins un code, dit code coupon, représentatif d'une valeur prédéfinie d'un nombre de X points pouvant être éditée sous forme de coupons (62) de points, et du nombre de coupons (62) de X points édités correspondant à ce code coupon et portant l'inscription de cette valeur de X points,
- des moyens de reconnaissance de la valeur de X points d'un coupon de X points présenté par un utilisateur, adaptés pour créer s'il n'en existe pas déjà, et créditer un compte de points de l'utilisateur d'une valeur de X points dans le serveur central (28).

38. Système informatique de gestion selon la revendication 37, caractérisé en ce que les moyens de mémorisation d'un code coupon comportent au moins un champ identifiant un commerce (5) auquel les coupons (62) de X points édités sont fournis.

39. Système informatique de gestion selon l'une des revendications 37 et 38, caractérisé en ce que le code coupon comprend une valeur représentative d'un code graphique pouvant être lu par des moyens optoélectroniques de lecture, en ce que chaque coupon (62) de X points porte le code graphique correspondant, et en ce que le système informatique de gestion comporte des moyens (34, 47) optoélectroniques de lecture de ce code graphique.

40. Système informatique de gestion selon l'une des revendications 27 à 39, caractérisé en ce qu'il comporte des moyens de mémorisation d'au moins une série de codes, dits codes utilisateurs, chaque code utilisateur étant adapté pour pouvoir identifier un utilisateur et repérer un enregistrement d'informations d'identification relatives à cet utilisateur après que ces informations d'identification ont été saisies et mémorisées.

41. Système informatique de gestion selon la revendication 40, caractérisé en ce que les codes utilisateurs sont formés de valeurs représentatives de codes graphiques pouvant être lus par des moyens optoélectroniques de lecture et en ce que les moyens (34, 46) de reconnaissance des données d'identification d'un utilisateur comportent des moyens (34, 47) optoélectroniques de lecture de tels codes graphiques.

42. Système informatique de gestion selon l'une des revendications 40 et 41, caractérisé en ce qu'il comprend au moins une série de codes utilisateurs éditée en un exemplaire unique sur des supports individuels (60) portant chacun un code utilisateur unique, et en ce que les moyens de mémorisation de cette série de codes utilisateurs comprend au moins un champ dont la valeur permet de reconnaître que les codes utilisateurs ont été édités.

43. Système informatique de gestion selon la revendication 42, caractérisé en ce que les moyens de mémorisation de la série de codes utilisateurs comportent au moins un champ identifiant un commerce (4) auquel les supports (60) de codes utilisateurs édités sont destinés à être fournis.

44. Système informatique de gestion selon l'une des revendications 42 et 43, caractérisé en ce que les supports (60) de codes utilisateurs sont formés d'étiquettes autocollantes.

45. Système informatique de gestion selon l'une des revendications 42 à 44, caractérisé en ce que les moyens de mémorisation d'une série de codes utilisateurs comportent au moins un champ représentatif d'une valeur prédéfinie d'un nombre de X points pouvant, lors de la création d'un compte de points d'un utilisateur présentant pour la première fois un support (60) de codes utilisateurs, être créditée dans ledit compte de points de l'utilisateur, identifié par ledit code utilisateur.

46. Système informatique de gestion selon l'une des revendications 27 à 45, caractérisé en ce que le serveur central (28) est relié à chaque zone (21, 23) et/ou chaque machine (24) de l'espace de loisirs (20) et est adapté pour commander le fonctionnement des moyens de contrôle d'accès et/ou des moyens de contrôle d'utilisation correspondants.

47. Système informatique de gestion selon l'une des revendications 27 à 46, caractérisé en ce qu'il comprend un automate central de commutation (36) relié au serveur central (28) du système informatique de gestion et piloté par ce serveur central (28), les moyens de contrôle d'utilisation d'utilisation de chaque machine (24) et les moyens de contrôle d'accès de chaque zone close (21, 23) étant reliés par un câble à l'automate central de commutation (36), de sorte que le serveur central (28) pilote les moyens de contrôle d'utilisation et les moyens de contrôle d'accès via l'automate central de commutation (36).

48. Système informatique de gestion selon l'une des revendications 27 à 47, caractérisé en ce qu'il est adapté pour pouvoir commander individuellement le fonctionnement de moyens de signalisation (43) solidaires d'une zone (21, 23) ou d'une machine (24) aptes à signaler un mode de fonctionnement spécial -notamment promotionnel- de cette zone (21, 23) ou machine (24).

49. Système informatique de gestion selon l'une des revendications 27 à 48, caractérisé en ce qu'il comporte au moins un poste (29, 30) de saisie/consultation adapté pour permettre la saisie d'informations relatives à un utilisateur, la création d'un compte de points pour un utilisateur, la délivrance d'un support de données d'identification ou d'un code utilisateur à un utilisateur, la modification et/ou la consultation par un utilisateur d'informations mémorisées dans le système informatique de gestion -notamment l'attribution manuelle ou automatique de points du compte de points d'un utilisateur dans au moins un compte de points d'un autre utilisateur, et la consultation du solde de son compte de points- par un utilisateur.
